(19) Europäisches Patentamt
European Patent Office
Office européen des brevets

(11) **EP 1 372 959 B1**

(12) **EUROPEAN PATENT SPECIFICATION**

(45) Date of publication and mention
of the grant of the patent:
**15.04.2009 Bulletin 2009/16**

(21) Application number: **02729391.9**

(22) Date of filing: **15.01.2002**

(51) Int Cl.:
**B32B 27/32** [(2006.01)]

(86) International application number:
**PCT/JP2002/000171**

(87) International publication number:
**WO 2002/055298 (18.07.2002 Gazette 2002/29)**

(54) **LAMINATE AND CONTAINER**

LAMINAT UND BEHÄLTER

STRATIFIE ET RECIPIENT

(84) Designated Contracting States:
**AT BE CH CY DE DK ES FI FR GB GR IE IT LI LU MC NL PT SE TR**

(30) Priority: **15.01.2001 JP 2001005858**
**11.04.2001 US 282871 P**
**14.12.2001 JP 2001382096**

(43) Date of publication of application:
**02.01.2004 Bulletin 2004/01**

(73) Proprietor: **Hosokawa Yoko Co., Ltd.**
**Tokyo (JP)**

(72) Inventors:
• **IWASAKI, Toshiharu,**
**c/oShowa Denko Pl.Prod.Co.,Ltd**
**Kawasaki-shi,**
**Kanagawa (JP)**

• **EZAKI, Tomohiko,**
**c/oShowa Denko Pl. Prod. Co.,Ltd**
**Kawasaki-shi, Kanagawa 210 (JP)**
• **SAKATA, Akihiko,**
**c/oShowa Denko Plast. Prod.Co.Ltd**
**Kawasaki-shi, Kanagawa 210-0865 (JP)**
• **OTAKE, Isao,**
**c/oShowa Denko Plastic Prod. Co.,Ltd**
**Kawasaki-shi,**
**Kanagawa 210-086 (JP)**

(74) Representative: **Strehl Schübel-Hopf & Partner**
**Maximilianstrasse 54**
**80538 München (DE)**

(56) References cited:
**EP-A- 0 605 220      WO-A-95/15851**
**WO-A-98/21032      GB-A- 2 028 716**
**US-A- 4 380 567      US-A- 4 657 811**
**US-A- 5 897 941**

**Description**

TECHNICAL FIELD

The present invention relates to a laminate and a container, which are excellent in the blocking resistance, transparency and flexibility, exhibit high seal part impact strength, and are suitable for uses as a medical container capable of filling blood, liquid medicament or the like, or as a container for retort foods. Examples of the medical container include blood bag, platelet storing bag, transfusion (liquid medicament) bag, multiple-compartment medical container (where two or more kinds of liquid medicaments are stored in separate compartments partitioned by an adhesive part and these multiple liquid medicaments are mixed in a closed state by peeling off the adhesive part on use) and artificial dialysis .bag.

BACKGROUND ART

The medical container for filling blood, liquid medicament or the like is required to have transparency for facilitating the inspection of mingling of a foreign matter or the verification of changes by the blending of a medicament, heat resistance sufficiently high to withstand a sterilization treatment, and flexibility for enabling easy discharge of liquid contents.

For the medical container or retort food container satisfying these properties, soft vinyl chloride, polyethylene-base materials such as high-pressure low density polyethylene, linear low-density polyethylene, high-density polyethylene and ethylene-vinyl acetate copolymer, and propylene-base mateials have been heretofore used. However, these have a problem, more specifically, the ethylene-vinyl acetate copolymer is low in the heat resistance, the vinyl chloride resin suffers from dissolving out of a plasticizer into the liquid medicament, the propylene is poor in the flexibility, and the high-pressure low-density polyethylene is inferior in the strength. The linear low-density polyethylene must be reduced in the density so as to satisfy the transparency or flexibility but the reduction in density incurs problems such as insufficient heat resistance or bleeding out of low molecular weight components of the resin.

In recent years, linear polyethylene materials produced using a single site-type catalyst and favored with high impact resistance and excellent transparency have been developed and the movement to apply these materials to medical or retort food containers is starting. Furthermore, a method of using these materials in combination as a two- or three-layer laminate has been proposed (see, JP-A-8-309939, JP-A-7-125738 and JP-A-8-244791 (the term "JP-A" as used herein means an "unexamined published Japanese patent application")).

Even in these proposed laminates, however, the transparency is still insufficient, the impact strength in heat-seal part is not satisfied and the heat-seal part may be ruptured on the dropping of bag. Therefore, improvements in these properties have been demanded. Furthermore, if the material is formed by water-cooling inflation, T-die method or the like, the obtained film or sheet has particularly smooth surface, giving rise to blocking of films or sheets with each other, and the separation of these films or sheets sometimes generates clouded flaws or the like on the surface to seriously deteriorate the outer appearance.

At present, demands for a container capable of sterilization at 121 ˚C are increasing and to satisfy these demands, higher heat resistance is needed.

EP-A-0 605 220 and US 4,657,811 disclose laminates comprising outer HDPE layers and intermediate LLDPE Layers.

The object of the present invention is to provide a polyethylene-base resin laminate having excellent properties in the transparency, blocking resistance, flexibility and the like, exhibiting heat resistance high enough to withstand a sterilization at 121˚C, and being greatly improved in the impact strength of seal part as compared with conventional laminates. The object of the present invention includes providing a medical container, a food container and the like comprising this resin laminate.

DISCLOSURE OF INVENTION

As a result of extensive investigations, the present inventors have found that the above-described objects can be attained by a laminate comprising a combination of an inner layer, an intermediate layer and an outer layer each composed of a specific resin material. The present invention has been accomplished based on this finding.

More specifically, the present invention provides a laminate having at least an inner layer, an intermediate layer and an outer layer, wherein

the inner layer comprises a resin material (A) containing a high-density polyethylene;

the intermediate layer comprises a resin material (B) mainly comprising Polyethylene-Base Resin I which is an ethylene α-olefin copolymer produced using a single-site type catalyst obtained by copolymerizing ethylene with an α-olefin having from 3 to 20 carbon atoms and which has the following physical properties (a) to (d):

(a) the density is less than 0.920 g/cm$^3$,
(b) the MFR is from 0.1 to 50 g/10 min,
(c) the amount X (% by mass) of o-dichlorobenzene-soluble portion at 25°C, the density d (g/cm$^3$) and the MFR (g/10 min) satisfy the following relationship:

$$X < 9.8 \times 10^3 \times (0.9300 - d + 0.008 \log MFR)^2 + 2.0$$

(d) the parameter Cb of the composition distribution is from 1.08 to 2.00; and

the outer layer is composed of a resin material (C) containing a high-density polyethylene, and also provides a medical container constructed by the laminate. The determination of X and Cb is described below.

The laminate of the present invention is preferably characterized in that the resin material (A) constituting the inner layer comprises only a high-density polyethylene.

The laminate of the present invention is preferably characterized in that the resin material (A) constituting the inner layer is a resin composition obtainable by blending a high-density polyethylene with Polyethylene-Base Resin II which is an ethylene·α-olefin copolymer obtained by copolymerizing ethylene and an α-olefin having from 3 to 20 carbon atoms and which has the following physical properties (e) to (h):

(e) the density is 0.920 to less than 0.960 g/cm$^3$;
(f) the MFR is from 0.1 to 50 g/10 min:
(g) the amount X (% by mass) of o-dichlorobenzene-soluble portion at 25°C, the density d (g/cm$^3$) and the MFR (g/10 min) satisfy the following relationship:

i) in the case of $d - 0.008 \log MFR \geqq 0.93$, X<2.0
ii) in the case of $d - 0.008 \log MFR < 0.93$,

$$X < 9.8 \times 10^3 \times (0.9300 - d + 0.008 \log MFR)^2 + 2.0,$$

and

(h) the parameter Cb of the composition distribution is less than 2.00.

The laminate of the present invention is preferably characterized in that when the resin material (A) constituting the inner layer is a blend of a high-density polyethylene and an ethylene·α-olefin copolymer obtained by copolymerizing ethylene and an α-olefin having from 3 to 20 carbon atoms, the α-olefin is one or more members selected from the group consisting of propylene, butene-1, 4-methylpentene-1, hexene-1, octene-1, decene-1 and dodecene-1.

The laminate of the present invention is preferably characterized in that the ethylene·α-olefin copolymer constituting Polyethylene-Base Resin II, the content of α-olefin in the copolymer is 30 mol% or less.

The laminate of the present invention is preferably characterized in that the resin material (A) constituting the inner layer is a resin composition obtained by blending from 40 to 99% by mass of the high-density polyethylene and from 60 to 1% by mass of Polyethylene-Base Resin II.

The laminate of the present invention is preferably characterized in that the high-density polyethylene of the resin material (A) has an MFR of 0.1 to 20 g/10 min and a density of 0.940 to 0.970 g/cm$^3$.

The laminate of the present invention is preferably characterized in that the resin material (B) constituting the intermediate layer comprises only Polyethylene-Base Resin I.

The laminate of the present invention is preferably characterized in that when the intermediate layer is an ethylene·α-olefin copolymer obtained by copolymerizing ethylene and an α-olefin having from 3 to 20 carbon atoms, the α-olefin is one or more members selected from the group consisting of propylene, butene-1, 4-methylpentene-1, hexene-1, octene-1, decene-1 and dodecene-1.

The laminate of the present invention is preferably characterized in that Polyethylene-Base Resin I satisfies the above-described physical properties (a) to (d) and at the same time, has the following physical properties (i) and (j):

(i) Mw/Mn is from 1.5 to 3.5,
(j) a plurality of peaks are present on the elution temperature-elution amount curve by continuous temperature rising elution fractionation (TREF).

The laminate of the present invention is preferably characterized in that the resin material (B) constituting the intermediate layer is a resin composition obtained by blending Polyethylene-Base Resin I and Polyethylene-Base Resin II.

The laminate of the present invention is preferably characterized in that the resin material (B) constituting the intermediate layer is a resin composition obtained by blending from 50 to 99% by mass of Polyethylene-Base Resin I and from 50 to 1% by mass of Polyethylene-Base Resin II.

The laminate of the present invention is preferably characterized in that the resin material (B) constituting the intermediate layer is a resin composition obtained by blending Polyethylene-Base Resin I with at least one member selected from the group consisting of high-density polyethylene, medium-density polyethylene, high-pressure low-density polyethylene, linear low-density polyethylene, polypropylene, ethylene-propylene random copolymer and ethylene-propylene block copolymer.

The laminate of the present invention is preferably characterized in that the resin material (B) constituting the intermediate layer is a resin composition obtained by blending Polyethylene-Base Resin I with a resin having the density of 0.935 g/cm$^3$ or greater.

The laminate of the present invention is preferably characterized in that the resin material (C) constituting the outer layer comprises only a high-density polyethylene.

The laminate of the present invention is preferably characterized in that the resin material (C) constituting the outer layer is a resin composition obtained by blending a high-density polyethylene and Polyethylene-Base Resin II.

The laminate of the present invention is preferably characterized in that the resin material (C) constituting the outer layer is a resin composition obtained by blending from 95 to 5% by mass of the high-density polyethylene and from 5 to 95% by mass of Polyethylene-Base Resin II.

The laminate of the present invention is preferably characterized in that the outer layer comprises a resin material (D) composed of a heat-resistant resin material having a melting point peak temperature of 130˚C or more as measured by differential scanning calorimeter (DSC), instead of said resin material (C) containing high-density polyethylene.

The laminate of the present invention is preferably characterized in that the heat-resistant resin material constituting the resin material (D) is a resin composition having blended therein at least one member selected from the group consisting of medium-density polyethylene, polypropylene, ethylene-propylene random copolymer, ethylene-propylene block copolymer, ethylene-vinyl alcohol copolymer (EVOH), polyamide such as 6-nylon and 6,6-nylon, and polyester such as polyethylene terephthalate and polybutylene terephthalate.

The laminate of the present invention is preferably characterized in that the thickness of the entire laminate is from 0.01 to 1 mm.

The laminate of the present invention is preferably characterized in that the thickness ratio among respective layers is inner layer/intermediate layer/outer layer = 30 to 1/40 to 98/30 to 1 (assuming that the sum total is 100).

The laminate of the present invention is preferably characterized in that the laminate is obtained by a water-cooling co-extrusion multilayer inflation method or a co-extrusion multilayer T-die casting method.

The container of the present invention comprises any one of the above-described laminates.

The container of the present invention is preferably characterized in that at least a part of the inner layer of the laminate is heat-sealed as a heat-seal layer.

The container of the present invention is preferably characterized in that the inner layer of the laminate is worked into a bag shape by heat-sealing the inner layers at four sides as a heat seal layer.


MODES FOR CARRYING OUT THE INVENTION

The laminate of the present invention has at least the following inner layer, intermediate layer and outer layer.

I. Inner layer

The inner layer in the laminate of the present invention comprises a resin material (A) containing a high-density polyethylene. The resin material (A) may comprise only a high-density polyethylene but may be a resin composition obtained by blending a high-density polyethylene with Polyethylene-Base Resin II having predetermined physical properties.

(1) High-density polyethylene

The high-density polyethylene for use in the inner layer is an ethylene homopolymer produced by a conventionally known method such as slurry method, solution method or vapor phase method, a copolymer of ethylene and an $\alpha$-olefin having from 3 to 12 carbon atoms, or a mixture thereof. Specific examples of the $\alpha$-olefin include propylene, butene-1, 4-methylpentene-1, hexene-1, octene-1, decene-1 and dodecene-1.

The MFR of high-density polyethylene is generally on the order of 0.1 to 20 g/10 min, preferably from 0.1 to 10 g/10 min. With an MFR in this range, the composition can have an appropriate melt tension and the film formation can be facilitated. The density is generally on the order of 0.940 to 0.970 g/cm$^3$, preferably from 0.945 to 0.970 g/cm$^3$. With a density in this range, the heat resistance can be advantageously maintained.

(2) Polyethylene-Base Resin II

Polyethylene-Base Resin II for use in the present invention has the following physical properties (e) to (h).

(e) Density

The density of Polyethylene-Base Resin II is from 0.920 to less than 0.960 g/cm$^3$. If the density is less than this range, blocking disadvantageously occurs, whereas if the density exceeds this range, the flexibility decreases and this is not preferred. The density is more preferably from 0.920 to 0.950 g/cm$^3$, still more preferably from 0.920 to 0.945 g/cm$^3$.

(f) MFR

The MFR of Polyethylene-Base Resin II is from 0.1 to 50 g/10 min. If the MFR is less than this range, formability disadvantageously decreases, whereas if the MFR exceeds this range, the strength lowers and this is not preferred. The MFR is more preferably from 0.1 to 20 g/10 min.

(g) o-Dichlorobenzene-soluble portion at 25°C

In Polyethylene-Base Resin II, the amount X (% by mass) of o-dichlorobenzene (hereinafter simply referred to as "ODCB") soluble portion, the density d (g/cm$^3$) and the MFR (g/10 min) satisfy a predetermined relationship.
Here, the ODCB-soluble portion at 25°C is measured by the following method. In 20 ml of the ODCB, 0.5 g of a sample is heated at 135°C for 2 hours and after the sample is completely dissolved, the solution is cooled to 25°C. This solution is left standing at 25°C over night and then filtered by a Teflon-made filter. The filtrate is sampled and using this filtrate, the absorption peak area near the wave number of 2,925 cm$^{-1}$, which is an asymmetric stretching vibration of methylene, is determined by means of an infrared spectrometer. Based on the value obtained, the sample concentration is calculated from the previously prepared calibration curve. From this value, the ODCB-soluble portion at 25°C can be determined.
In Polyethylene-Base Resin II, the amount X (% by mass) of ODCB-soluble portion at 25°C, the density d (g/cm$^3$) and the MFR (g/10 min) have the following relationship:

i) in the case of d-0.008logMFR$\geqq$0.93, X is less than 2% by mass, preferably less than 1% by mass, and
ii) in the case of d-0.008logMFR<0.93, X has a relationship of X<9.8$\times$10$^3\times$(0.9300-d+0.008logMFR)$^2$+2.0, preferably X<7.4$\times$ 10$^3\times$ (0.9300-d+0.008logMFR)$^2$+1.0, more preferably X<5.6$\times$10$^3\times$ (0.9300-d+0.008logMFR)$^2$+0.5. Here, the density d and the MFR in the right side of the inequality above are a numerical value without respective units. Accordingly, the amount X (% by mass) of the ODCB-soluble portion at 25°C must be smaller than the value obtained by substituting only the values of density d and MFR of Polyethylene-Base Resin II into the formula in the right side of the inequality.

The ODCB-soluble portion at 25°C includes a high branching degree component and a low molecular weight component mainly contained in the polyethylene-base resin. This portion causes a problem in the hygiene or blocking on the inner surface of a formed article and therefore, the content thereof is preferably small. The amount of ODCB-soluble portion is affected by the content and the molecular weight of comonomer. Accordingly, when the density, MFR and the amount of ODCB-soluble portion as indices satisfy the above-described relationship, this means less partiality of the copolymerization component ($\alpha$-olefin) contained in the entire resin. In the present invention, when Polyethylene-Base Resin II satisfies the above-described relationship regarding the ODCB-soluble portion, the heat resistance, hygiene property and blocking resistance are improved and therefore, this is preferred.

(h) Cb

In Polyethylene-Base Resin II, the parameter Cb of the composition distribution is less than 2.00.
The method for measuring the parameter Cb of the composition distribution is described below. In o-dichlorobenzene (ODCB) having added thereto an antioxidant, a sample is dissolved under heating at 135°C to have a sample concentration of 0.2% by mass. This solution is transferred to a column filled with diatomaceous earth (Celite 545) and cooled to 25°C at a rate of 1°C/min, thereby depositing the sample on the surface of Celite. While flowing ODCB into this column at a constant flow rate, the column temperature is elevated stepwise to 130°C in increments of 5°C to elute and thereby fractionate the sample. Subsequently, methanol is mixed with the eluate and the sample reprecipitated is filtered and dried to obtain fraction samples at respective elution temperatures. The mass fraction and the branching degree (the number of branches per 1,000 carbon atoms) of the eluted sample at each temperature are determined by an isotopic carbon nuclear magnetic resonance apparatus ($^{13}$C-NMR).

The branching degrees of the fractions at 30 to 90°C are corrected as follows. The measured branching degrees are plotted with respect to the elution temperature and the correlation is approximated to a straight line by the least square and thereby, a calibration curve is configured. The coefficient of correlation in this approximation is sufficiently large. The value determined from this calibration curve is designated as the branching degree of each fraction. As for the components at elution temperatures of 95°C or more, the linear relation is not necessarily established between the elution temperature and the branching degree and therefore, the values found are used without performing this correction.

Subsequently, the mass fraction $w_i$ of each fraction is divided by the variation $(b_i - b_{i-1})$ in the branching degree $b_i$ per the elution temperature of 5°C to determine the relative concentration $C_i$, and the determined relative concentrations are plotted with respect to the branching degree to obtain a composition distribution curve. This composition distribution curve is divided into fixed widths and the composition distribution parameter Cb is calculated according to the following formula:

$$Cb = \left( \frac{\sum C_j b_j^2}{\sum C_j b_j} \right) \Big/ \left( \frac{\sum C_m b_j}{\sum C_j} \right)$$

wherein $C_j$ and $b_j$ each independently represents the relative concentration and the branching degree of the j-th fraction. In the case where the sample composition is uniform, the composition distribution parameter Cb is 1.0. As the composition distribution is more widened, the value becomes larger.

The composition distribution parameter Cb of Polyethylene-Base Resin II used in the present invention is less than 2.00, preferably from 1.04 to 2.00. If the Cb is 2.00 or more, the blocking resistance is low and the heat seal properties are defective. Furthermore, the bleeding out of low molecular weight components and the like to the resin surface readily takes place and this causes a problem in hygiene.

Examples of Polyethylene-Base Resin II include ethylene·$\alpha$-olefin copolymer. The $\alpha$-olefin is an $\alpha$-olefin having from 3 to 20 carbon atoms, preferably from 3 to 12 carbon atoms. Specific examples thereof include propylene, butene-1, 4-methylpentene-1, hexene-1, octene-1, decene-1 and dodecene-1. One or more of these $\alpha$-olefins can be used. The content of $\alpha$-olefin in the copolymer is usually 30 mol% or less, preferably 20 ml% or less.

Production process of Polyethylene-Base Resin II

The production process of Polyethylene-Base Resin II is not particularly limited and this resin may be produced by any method insofar as the above-described physical properties are satisfied, however, Polyethylene-Base Resin II is preferably obtained by copolymerizing ethylene with an $\alpha$-olefin having from 3 to 20 carbon atoms in the presence of a catalyst which contains 0, 1 or 2 ligand(s) having a cyclopentadienyl skeleton and which contains a transition metal compound of Group IV of the Periodic Table as an essential component.

Polyethylene-Base Resin II is more preferably produced using a catalyst described below, however, the present invention is not limited thereto.

For example, a catalyst system comprising an organic transition catalyst having a transition metal selected from Group IV of the Periodic Table and containing 0, 1 or 2 cyclopentadienyl derivative(s), and a compound capable of reacting with the organic transition catalyst to form an ionic complex and/or an organic aluminum oxy compound can be used. In this catalyst system, an organic aluminum compound may also be used, if desired. Furthermore, the organic transition catalyst can also be used by mounting it on an inorganic compound, fine particle or the like, if desired.

The catalysts disclosed in the following patent publications can be used in the production, however, the present invention is not limited thereto. Examples of the catalyst which can be used include those disclosed in JP-A-11-293054, JP-A-11-310607, JP-A-8-309939, JP-A-10-77370, and the like.

(3) Resin material (A)

The resin material (A) contains the above-described high-density polyethylene. The resin material (A) may comprise only the high-density polyethylene or may be a resin composition comprising the high-density polyethylene and Polyethylene-Base Resin II.

In the case of a resin composition, the ratio between the high-density polyethylene and Polyethylene-Base Resin II blended in the resin material (A) is such that the high-density polyethylene is from 40 to 99% by mass, preferably from 50 to 99% by mass, more preferably from 60 to 99% by mass. If the ratio of the high-density polyethylene blended is less than the above-described range, the impact strength of the seal part decreases and this is not preferred, whereas if the ratio blended exceeds the above-described range, the strength disadvantageously decreases.

In the present invention, particularly, when the inner layer is composed of a resin material having blended therein 50% by mass or more of a high-density polyethylene and thus mainly comprising the high-density polyethylene, surprisingly, not only the heat resistance is improved but also the heat seal property, in particular, the impact strength of the seal part is remarkably improved as compared with the case where the inner layer is composed of a resin material mainly comprising an ethylene·$\alpha$-olefin copolymer having the above-described physical properties (e) to (h).

In the resin material (A), if desired, known additives commonly used may be appropriately blended within the range of not seriously impairing the effect of the present invention such as antistatic agent, antioxidant, lubricant, anti-blocking agent, antifoggant, organic or inorganic pigment, ultraviolet absorber and dispersant.

II. Intermediate layer

The intermediate layer in the laminate of the present invention is composed of a resin material (B) mainly comprising Polyethylene-Base Resin I having the following physical properties (a) to (d).

(1) Polyethylene-Base Resin I

(a) Density

The density of Polyethylene-Base Resin I is less than 0.920 g/cm$^3$. If the density exceeds this range, the transparency and the flexibility disadvantageously decrease. The density is more preferably from 0.880 to 0.920 g/cm$^3$, still more preferably from 0.890 to 0.918 g/cm$^3$.

(b) MFR

The MFR of Polyethylene-Base Resin I is from 0.1 to 50 g/10 min. If the MFR is less than this range, the formability disadvantageously decreases, whereas if the MFR exceeds this range, the strength decreases. The MFR is more preferably from 0.1 to 10 g/10 min.

(c) ODCB-soluble portion

In Polyethylene-Base Resin I, the amount X (% by mass) of ODCB-soluble portion at 25°C, the density d and the MFR satisfy a predetermined relationship. The ODCB-soluble portion at 25°C can be determined by the above-described measuring method. The relationship in the amount X (% by mass) of the ODCB-soluble portion at 25°C, the density d (b/cm$^3$) and the MFR (g/10 min) is as follows. These satisfy the relationship of $X<9.8\times10^3\times(0.9300-d+0.008\log MFR)^2+2.0$, preferably $X<7.4\times10^3\times(0.9300-d+0.008\log MFR)^2+1.0$, more preferably $X<5.6\times10^3\times(0.9300-d+0.008\log MFR)^2+0.5$. Here, the density d and the MFR in the right side of the inequality above are a numerical value without respective units. Accordingly, the amount X (% by mass) of the ODCB-soluble portion at 25°C must be smaller than the value obtained by substituting only the values of density d and MFR of Polyethylene-Base Resin I into the formula in the right side of the inequality. In the present invention, when Polyethylene-Base Resin I satisfies the above-described relation regarding the ODCB-soluble portion, good results are obtained in the resistance, hygiene property and blocking resistance.

(d) Cb

The composition distribution parameter Cb of Polyethylene-Base Resin I is less than 2.00, preferably from 1.08 to 2.00. With a Cb in this range, high blocking resistance and excellent heat seal properties are attained. If the Cb is 2.00 or more, the blocking resistance is low and the heat seal property is defective. In addition, the bleeding out of low molecular weight components and the like to the resin surface readily occurs and this causes a problem in hygiene. The measuring method of the composition distribution parameter Cb is as described above.

Examples of Polyethylene-Base Resin I include ethylene·$\alpha$-olefin copolymer. The $\alpha$-olefin is an $\alpha$-olefin having from 3 to 20 carbon atoms, preferably from 3 to 12 carbon atoms. Specific examples thereof include propylene, butene-1, 4-methylpentene-1, hexene-1, octene-1, decene-1 and dodecene-1. One or more of these $\alpha$-olefins may be used. The content of $\alpha$-olefin in the copolymer is usually 30 mol% or less, preferably 20 mol% or less.

(2) Preferred Polyethylene-Base Resin I

More prefened examples of Polyethylene-Base Resin I for use in the present invention include those satisfying the above-described physical properties (a) to (d) and additionally satisfying the physical properties (i) and (j) below.

(i) Mw/Mn

Polyethylene-Base Resin I preferred in the present invention has a molecular weight distribution (Mw/Mn) of 1.5 to 3.5, preferably from 2.0 to 3.0. With respect to the method for calculating Mw/Mn, a weight average molecular weight (Mw) and a number average molecular weight (Mn) are determined by gel permeation chromatography (GPC) and from the determined values, the ratio Mw/Mn is obtained. If the Mw/Mn is less than the above-described range, the formability is inferior, whereas if the Mw/Mn exceeds the above-described range, the impact resistance is poor.

(j) Peak on elution temperature-elution amount curve by TREF

Polyethylene-Base Resin I preferred in the present invention has a plurality of peaks on the elution temperature-elution amount curve by a continuous rising temperature elution fractionation method (TREF). More preferably, at least one of these peaks is preferably present between 85°C and 100°C. By virtue of the presence of this peak, the heat resistance of the formed article is enhanced.

The measurement by TREF is performed as follows. In ODCB having added thereto an antioxidant, a sample is dissolved under heating at 135°C to have a sample concentration of 0.05% by mass. Then, 5 ml of this sample solution is poured into a column packed with glass beads and cooled to 25°C at a cooling rate of 0.1°C/min to deposit the sample on the surface of glass beads. Subsequently, while flowing ODCB through this column at a constant flow rate, the column temperature is elevated at a constant rate of 50°C/hour to elute the sample in sequence. At this time, the concentration of the sample eluted into a solvent is continuously measured by an infrared spectrometer having absorption at 2,925 $cm^{-1}$ which is the wave number in the asymmetric stretching vibration of methylene. From the value measured, the concentration of ethylene·$\alpha$-olefin copolymer in the solution is quantitated and therefrom, the relationship between the elution temperature and the elution rate is obtained. In the TREF analysis, the change in the elution rate with respect to the change in the temperature can be continuously analyzed using a trace amount of sample and therefore, relatively fine peaks which cannot be detected by fractionation can be detected.

(3) Production process of Polyethylene-Base Resin I

The production process of Polyethylene-Base Resin I is not particularly limited and this resin may be produced by any method insofar as the above-described physical properties are satisfied, however, Polyethylene-Base Resin I is preferably obtained by copolymerizing ethylene with an $\alpha$-olefin having from 3 to 20 carbon atoms in the presence of a catalyst which contains 0, 1 or 2 ligand(s) having a cyclopentadienyl skeleton and which contains a transition metal compound of Group IV of the Periodic Table as an essential component.

Polyethylene-Base Resin I is more preferably produced using a catalyst described below, however, the present invention is not limited thereto.

For example, a catalyst system comprising an organic transition catalyst having a transition metal selected from Group IV of the Periodic Table and containing 0, 1 or 2 cyclopentadienyl derivative(s), and a compound capable of reacting with the organic transition catalyst to form an ionic complex, and/or an organic aluminum oxy compound can be used. In this catalyst system, an organic aluminum compound may also be used, if desired. Furthermore, the organic transition catalyst can also be used by mounting it on an inorganic compound, fine particle or the like, if desired.

Polyethylene-Base Resin I can be produced using a catalyst disclosed, for example, in the patent publications described above, however, the present invention is not limited thereto.

The polymerization may be performed by using any method of vapor phase method, slurry method and solution method. Also, the polymerization may be a single stage method or a multi-stage method.

(4) Resin material (B)

The resin material (B) mainly comprises Polyethylene-Base Resin I, preferably comprises only Polyethylene-Base Resin I, however, resins other than Polyethylene-Base Resin I may be blended within the range of not impairing the effect of the present invention. Examples of the other resins include Polyethylene-Base Resin II, high-density polyethylene, medium-density polyethylene, high-pressure low-density polyethylene, linear low-density polyethylene, polypropylene, ethylene-propylene random copolymer and ethylene-propylene block copolymer. In the case of blending other resins, the ratio in percentage of Polyethylene-Base Resin I is suitably 50% by mass or more, preferably 60% by mass or more. If the ratio in percentage of Polyethylene-Base Resin I is less than 50% by mass, the strength disadvantageously decreases. In addition, among the other resins, resins having a density of 0.935 $g/cm^3$ or greater are preferable, and resins having a density of 0.940 $g/cm^3$ or greater are more preferable. These resins are preferable, because they improve heat resistance. Examples of these resins include resins which are selected from Polyethylene-Base Resin II, linear low-density polyethylene, and high-density polyethylene, and which have a density of 0.935 $g/cm^3$ or greater. In particular, high-density polyethylene having a density of 0.935 $g/cm^3$ or greater is preferable.

In the resin material (B), if desired, known additives commonly used may be appropriately blended within the range of not seriously impairing the effect of the present invention, such as antistatic agent, antioxidant, lubricant, anti-blocking agent, antifoggant, organic or inorganic pigment, ultraviolet absorber and dispersant.

III. Outer layer

The outer layer in the laminate of the present invention comprises a resin material (C) containing a high-density polyethylene. The resin material (C) may comprise only a high-density polyethylene or may comprise a resin composition obtained by blending the high-density polyethylene and/or high-pressure low-density polyethylene with Polyethylene-Base Resin II constituting the inner layer and having the physical properties (e) to (h).

These high-density polyethylene and Polyethylene-Base Resin II can be selected from those described above as the resin which can be used as the high-density polyethylene and Polyethylene-Base Resin II constituting the inner layer.

In the case of using the resin composition comprising a high-density polyethylene and Polyethylene-Base Resin II for the outer layer, the blending ratio in percentage is such that Polyethylene-Base Resin II is from 5 to 95% by mass, preferably from 15 to 85% by mass, more preferably from 30 to 70% by mass. If the blending ratio in percentage of Polyethylene-Base Resin II is less than the above-described range, the strength disadvantageously decreases, whereas if the blending ratio in percentage exceeds the above-described range, the blocking may disadvantageously take place.

When the outer layer comprises the resin composition obtained by blending the high-density polyethylene and high-pressure low-density polyethylene, the ratio in percentage of high-pressure low-density polyethylene is suitably from 5 to 95% by weight, preferably from 15 to 85% by weight, more preferably from 30 to 75% by weight. If the ratio in percentage of high-pressure low-density polyethylene is in such range, formability is improved, and inferior appearance, such as wrinkles, rarely occur. The outer layer thereby has a good appearance.

The outer layer may also be composed of a heat-resistant resin material (D) having a melting point peak temperature of 130˚C or more as measured by differential scanning calorimeter (DSC). In the case where a plurality of peaks are present, the highest temperature peak is 130˚C or more. Examples of the resin material (D) include medium-density polyethylene, polypropylene, ethylene-propylene random copolymer, ethylene-propylene block copolymer, ethylene-vinyl alcohol copolymer (EVOH), polyamide such as 6-nylon and 6,6-nylon, and polyester such as polyethylene terephthalate and polybutylene terephthalate.

In the resin materials (C) and (D) constituting the outer layer, if desired, known additives commonly used may be appropriately blended within the range of not seriously impairing the effect of the present invention, such as antistatic agent, antioxidant, lubricant, anti-blocking agent, antifoggant, organic or inorganic pigment, ultraviolet absorber and dispersant.

IV. Laminate

(1) Layer structure

The layer structure in the laminate of the present invention is not particularly limited insofar as the laminate has an inner layer, an intermediate layer and an outer layer (the inner layer is a heat seal layer) in this order. As for the number of layers, a three-layer structure consisting of outer layer/intermediate layer/inner layer is most preferred, however, the present invention is not limited thereto. A layer structure where an additional layer is provided in the intermediate layer of the outer layer/intermediate layer/inner layer structure, namely, outer layer/intermediate layer/middlemost layer/intermediate layer/inner layer, may be employed or another layer may be appropriately provided, if desired, between outer layer and intermediate layer or between intermediate layer and inner layer. Examples of these other layers include adhesive layer, gas barrier layer and ultraviolet ray absorbing layer. For example, a five-layer structure such as outer layer/gas barrier layer/intermediate layer/adhesive layer/inner layer may also be employed. In addition, a layer may further be newly provided in the outer side of the outer layer.

Examples of the adhesive constituting the adhesive layer include polyurethane-base adhesive, vinyl acetate adhesive, hot melt adhesive and adhesive resins such as maleic anhydride-modified polyolefin and ionomer resin. In the case of incorporating an adhesive layer into the layer structure, this layer may be laminated by co-extruding essential constituent layers such as inner layer and intermediate layer together with this adhesive.

The layer structure of the present invention is most preferably a structure of inner layer/intermediate layer/outer layer = high-density polyethylene/resin composition obtained by blending Polyethylene-Base Resin I having physical properties (a) to (d) and (i) and (j) and Polyethylene-Base Resin II having physical properties (e) to (h)/resin composition obtained by blending high-density polyethylene and Polyethylene-Base Resin II having physical properties (e) to (h).

By employing this layer structure, surprisingly, the heat resistance and the seal part impact strength are remarkably improved. This is an effect brought out particularly when this specific layer structure is employed, and this effect cannot be obtained when Polyethylene-Base Resin II having physical properties (e) to (h) is used alone as the resin material constituting the inner layer. The reasons why such an effect is brought out are not necessarily clarified, however, it is considered that the physical properties (strength) of not only the inner layer but also the intermediate layer and depending on the case, even the properties of the outer layer affect the strength of the seal part when the inner layer is heat sealed with each other. This effect obtained by the combination of layers composed of specific resin materials is neither described not suggested in conventional arts.

(2) Thickness of each layer

The entire thickness of the laminate of the present invention is not particularly limited and may be appropriately selected according to the end use, however, the entire thickness is preferably from 0.01 to 1 mm, more preferably from 0.1 to 0.5 mm. The entire thickness within the above-described range is advantageous in that high transparency and excellent flexibility are attained.

The thickness ratio among respective layers is not particularly limited, however, the laminate is preferably constructed such that the low-density layer (the intermediate layer) using the resin material having a density of 0.920 g/cm$^3$ or less works out to a main layer in view of the thickness. The thickness ratio among these layers are more preferably on the order of inner layer : intermediate layer : outer layer = 1 to 30 : 40 to 98 : 1 to 30 (thickness ratio) (provided that the total thickness of all layers is 100).

(3) Method for producing laminate

The production method for the laminate of the present invention is not particularly limited, however, examples thereof include a method of forming the laminate film or sheet by water-cooling or air-cooling co-extrusion multi-layer inflation, co-extrusion multi-layer T-die casting, dry lamination or extrusion lamination. Among these, preferred are water-cooling co-extrusion multilayer inflation method and co-extrusion multilayer T-die casting method. Particularly, use of water-cooling co-extrusion multi-layer inflation method is advantageous in many points such as transparency and hygiene. In addition, a multilayer blow molding product may also be formed by multilayer blow molding process.

The laminate film or sheet may be further processed into a bag by heat-sealing or the multilayer blow molding product may be used as it is or may be used as a container after fixing a cap or the like. In particular, the laminate of the present invention is preferably worked into a bag shape by heat-sealing at least one part of a laminate film or sheet using the inner layer as a heat-seal layer.

V. Uses

Particularly when the laminate of the present invention is worked into a bag shape by heat-sealing the inner layer as a heat-seal layer, the impact strength of the heat-seal part after sealing the heat-seal part at a temperature of 155°C can be as high as 700 kJ/m$^2$ or more, further 800 kJ/m$^2$ or more, still further 900 kJ/m$^2$ or more.

Also, the laminate of the present invention can maintain high impact strength of the seal part even after a heat treatment necessary particularly for medical or food container and the like is performed, such as sterilization. More specifically, for example, when a sterilization treatment is performed (121°C, 20 min), the seal part impact strength after the sterilization treatment is as high as 500 kJ/m$^2$ or more, further 600 kJ/m$^2$ or more, still further 700 kJ/m$^2$ or more.

The seal part impact strength as used herein is a value when the heat sealing is performed under the heat sealing conditions such that the sealing temperature is 155°C, the sealing time is 5 seconds and the sealing pressure is 0.4 MPa.

As such, the container comprising the laminate of the present invention can maintain high seal part strength even after the heat-treatment such as sterilization. Accordingly, this container is suitable for medical containers, food containers such as retort pouch, and the like, which are required to have high seal part strength also after the sterilization treatment. In particular, this container can be suitably used for medical containers such as medical transfusion bag, more specifically, blood bag, platelet storing bag, transfusion (liquid medicament) bag, multiple-compartment medical container (where two or more kinds of liquid medicaments are stored in separate compartments partitioned by an adhesive part and these multiple liquid medicaments are mixed in a closed state by peeling off the adhesive part on use), artificial dialysis bag and the like.

Examples

The present invention is described in greater detail below by referring to Examples, however, the present invention is not limited to these Examples. In Examples and Comparative Examples, the physical properties were evaluated by the following methods.

(1) MFR: MFR was measured in accordance with JIS-K6760.

(2) Density: The density was measured in accordance with JIS-K6760.

(3) ODCB-soluble portion

In 20 ml of ODCB, 0.5 g of a sample was heated at 135°C for 2 hours and after the sample was completely dissolved, the solution was cooled to 25°C. This solution was left standing at 25°C over night and then filtered by a Teflon-made filter. The filtrate was sampled and using this filtrate, the absorption peak area near the wave number of 2,925 $cm^{-1}$, which is an asymmetric stretching vibration of methylene, was determined by means of an infrared spectrometer. Based on the value obtained, the sample concentration was calculated from the previously prepared calibration curve. From this value, the ODCB-soluble portion at 25°C was determined.

(4) Cb

In o-dichlorobenzene (ODCB) having added thereto an antioxidant (2,6-Di-t-Butyl-p-Cresol, 0.1% by weight), a sample was dissolved under heating at 135°C to have a sample concentration of 0.2% by mass. This solution was transferred to a column filled with diatomaceous earth (Celite 545) and cooled to 25°C at a rate of 0.1°C/min, thereby depositing the sample on the surface of Celite. While flowing ODCB into this column at a rate of 1 ml/min, the column temperature was elevated stepwise to 120°C in increments of 5°C to elute and thereby fractionate the sample. Subsequently, methanol was mixed with the eluate and the sample reprecipitated was filtered and dried to obtain fraction samples at respective elution temperatures. The mass fraction and the branching degree (the number of branches per 1,000 carbon atoms) of the eluted sample at each temperature were determined by $^{13}$C-NMR. Subsequently, the mass fraction $w_i$ of each fraction was divided by the variation ($b_i$-$b_{i-1}$) in the branching degree $b_i$ per the elution temperature of 5°C to determine the relative concentration $C_i$, and the determined relative concentrations are plotted with respect to the branching degree to obtain a composition distribution curve. This composition distribution curve was divided into fixed widths and the composition distribution parameter Cb was calculated according to the formula shown above.

(5) Mw/Mn

A weight average molecular weight (Mw) and a number average molecular weight (Mn) were determined by gel permeation chromatography (GPC) and from the determined values, the ratio Mw/Mn was obtained. The detailed conditions were as follows.

GPC: Model 150 type, produced by Waters

Eluting solvent: ODCB

Column Temperature: 135°C

Column: GMMHR-H(S), produced by Tosoh Corporation

(6) Number of peaks by TREF

In ODCB having added thereto an antioxidant (2,6-Di-t-Butyl-p-Cresol, 0.1% by weight), a sample was dissolved under heating at 135°C to have a sample concentration of 0.05% by mass. Then, 5 ml of this sample solution was poured into a column packed with glass beads and cooled to 25°C at a cooling rate of 0.1°C/min to deposit the sample on the surface of glass beads. Subsequently, while flowing ODCB through this column at a rate of 1 ml/min, the column temperature was elevated at a constant rate of 50°C/hour to elute the sample in sequence. At this time, the concentration of the sample eluted into a solvent was continuously measured by an infrared spectrometer having absorption at 2,925 $cm^{-1}$ which was the wave number in the asymmetric stretching vibration of methylene. Moreover, as the infrared spectrometer, a Cross fractionation chromatography (marketed by Mitsubishi Chemical Corporation). From the value measured, the concentration of ethylene·α-olefin copolymer in the solution was quantitated and therefrom, the relationship between the elution temperature and the elution rate was obtained. From the values obtained, an elution temperature-elution amount curve was configured and the number of peaks was counted.

(7) Seal part impact strength

Using the inner layer as the heat seal layer, heat sealing was performed under the conditions such that the pressure was 0.4 MPa, the sealing temperature was 155°C and the sealing time was 5 seconds. The resulting seal part was punched into an s-type test shape used in the tensile and impact test method (ASTM-D1822) such that the seal interface came to the center. After the sterilization treatment (121°C, 20 minutes), the seal part was opened like a T shape separated by the seal interface and measured at 23˚C by a tensile and impact tester.

(8) Blocking resistance

Two sheets of films each cut into a 20 mm-width strip were superposed only in the length of 5 cm and thereon, a weight of 10 kg was placed. After allowing these sheets to stand in an oven kept at 50˚C for 48 hours, the conditions were adjusted at 23˚C and two sheets of films were peeled apart from each other. The peeled surface was observed with an eye.

○: The surface was not clouded.

×: The surface was clouded.

(9) Heat resistance

A film having a length of 20 cm and a width of 20 cm was cut, the three sides were sealed, water was poured into the inside thereof, and the last one side was sealed to produce a bag of which the all four sides were sealed. After sterilization at 121˚C for 20 minute, the outer appearance was evaluated with an eye.

◎ : No deformation and no wrinkling.

○: No deformation but slight wrinkling.

× : Deformed and many wrinkles.

Examples 1 to 12 and Comparative Examples 1 to 3:

The laminate film comprising an inner layer, an intermediate layer and an outer layer each composed of the resin shown in Table 1 was produced by water-cooling co-extrusion multi-layer inflation. The thickness of each layer from the inner layer was set to 10 $\mu$m/225 $\mu$m/15 $\mu$m. The measurement results of heat resistance, blocking resistance and seal part impact strength are shown in Table 2.

The resins used in Examples and Comparative Examples are described below.

(1) s-LL1: Ethylene-hexene-1 copolymer (density: 0.898 g/cm$^3$, MFR: 1.0 g/10 min, Mw/Mn: 2.7) produced using a single site-type catalyst

(2) s-LL2: Ethylene-hexene-1 copolymer (density: 0.905 g/cm$^3$, MFR: 1.2 g/10 min, Mw/Mn: 2.8) produced using a single site-type catalyst

(3) s-LL3: Ethylene-hexene-1 copolymer (density: 0.901 g/cm$^3$, MFR: 0.8 g/10 min, Mw/Mn: 2.3) produced using a single site-type catalyst

(4) s-LL4: Ethylene-hexene-1 copolymer (density: 0.924 g/cm$^3$, MFR: 2.1 g/10 min, Mw/Mn: 2.6) produced using a single site-type catalyst

(5) s-LL5: Ethylene-hexene-1 copolymer (density: 0.942 g/cm$^3$, MFR: 1.2 g/10 min, Mw/Mn: 2.2) produced using a single site-type catalyst

(6) HD1: High-density polyethylene (density: 0.945 g/cm$^3$, MFR: 2.8 g/10 min)

(7) HD2: High-density polyethylene (density: 0.952 g/cm$^3$, MFR: 3.5 g/10 min)

(8) LD1: High-pressure low-density polyethylene (density: 0.927 g/cm$^3$, MFR: 1.5 g/10 min)

(9) PP1: Propylene-ethylene random copolymer (density: 0.900 g/cm$^3$, MFR: 4.0 g/10 min)

(10) PP2: Propylene-ethylene block copolymer (density: 0.900 g/cm$^3$, MFR: 2.5 g/10 min)

Table 1

| | MFR (g/10 min.) | Density (g/cm$^3$) | ODCB-Soluble Portion (% by mass) | (c)[1] | (g)[2] | Cb | Mw/Mn | TREF Peak Number |
|---|---|---|---|---|---|---|---|---|
| s-LL1 | 1.0 | 0.898 | 11.6 | 12.0 | 12.0 | 1.40 | 2.7 | plural |
| s-LL2 | 1.2 | 0.905 | 3.4 | 8.4 | 8.4 | 1.35 | 2.8 | plural |
| s-LL3 | 0.8 | 0.901 | 3.1 | 9.8 | 9.8 | 1.10 | 2.3 | singular |
| s-LL4 | 2.1 | 0.924 | 0.8 | 2.7 | 2.7 | 1.20 | 2.4 | plural |
| s-LL5 | 1.2 | 0.942 | 0.4 | 3.3 | 2.0 | 1.15 | 2.5 | singular |
| HD1 | 2.8 | 0.945 | - | | | - | - | - |
| HD2 | 3.5 | 0.952 | - | | | - | - | - |

(continued)

| | MFR (g/10 min.) | Density (g/cm³) | ODCB-Soluble Portion (% by mass) | (c)[1] | (g)[2] | Cb | Mw/Mn | TREF Peak Number |
|---|---|---|---|---|---|---|---|---|
| LD1 | 1.5 | 0.927 | - | | | - | - | - |
| PP1 | 4.0 | 0.900 | - | | | - | - | - |
| PP2 | 2.5 | 0.900 | - | | | - | - | - |

In the Table 1,
1) denotes X value indicated by the following formula:

$$X = 9.8 \times 10^3 \times (0.9300 - d + 0.008 \log MFR)^2 + 2.0$$

wherein the density is denoted by d (g/cm³), and the MFR is denoted by MFR (g/10 min), and
2) denotes X value indicated by the following formula:
in the case of d-0.008logMFR≧ 0.93, X<2.0, and
in the case of d-0.008logMFR<0.93, $X < 9.8 \times 10^3 \times (0.9300 - d + 0.008 \log MFR)^2 + 2.0$
wherein the density is denoted by d (g/cm³), and the MFR is denoted by MFR (g/10 min).

Table 2

| | Inner Layer | Intermediate Layer | Outer Layer | Heat Resistance | Blocking Resistance | Seal Part Impact Strength (kJ/m²) |
|---|---|---|---|---|---|---|
| Example 1 | HD2 | s-LL1 | HD2 | ○ | ○ | 1200 |
| Example 2 | HD2/s-LL4=90/10 | s-LL2 | HD1 | ○ | ○ | 1000 |
| Example 3 | HD2 | s-LL2/s-LL5=90/10 | HD2/s-LL5=30/70 | ◎ | ○ | 850 |
| Example 4 | HD2 | s-LL1/s-LL5=70/30 | HD2/s-LL5=50/50 | ◎ | ○ | 1100 |
| Example 5 | HD1/s-LL4=40/60 | s-LL2 | HD1/s-LL5=50/50 | ○ | ○ | 880 |
| Example 6 | HD1 | s-LL2/s-LL4=60/40 | PP1 | ○ | ○ | 600 |
| Example 7 | HD1 | s-LL3/s-LL5=70/30 | HD1/s-LL5=70/30 | ○ | ○ | 950 |
| Example 8 | HD2 | s-LL2 | PP2 | ○ | ○ | 650 |
| Example 9 | HD2 | s-LL2/HD2=90/10 | HD2 | ◎ | ○ | 900 |
| Example 10 | HD2/s-LL4=90/10 | s-LL2/HD2=90/10 | HD2/s-LL5=30/70 | ◎ | ○ | 890 |
| Example 11 | HD2 | s-LL2/HD2=90/10 | HD2/LD1=30/70 | ◎ | ○ | 850 |
| Example 12 | HD2 | s-LL2/HD2=85/15 | HD2/s-LL5=30/70 | ◎ | ○ | 750 |
| Comparative Example 1 | LD1 | s-LL2 | LD1 | × | ○ | 550 |

(continued)

|  | Inner Layer | Intermediate Layer | Outer Layer | Heat Resistance | Blocking Resistance | Seal Part Impact Strength (kJ/m$^2$) |
|---|---|---|---|---|---|---|
| Comparative Example 2 | HD1 | s-LL3 | LD1 | × | ○ | 500 |
| Comparative Example 3 | s-LL4/HD2=95/5 | s-LL2/s-LL4=70/30 | HD2 | ○ | ○ | 200 |

Film thickness: 250 μm
Inner layer/intermediate layer/outer layer =10 μm/225 μm/15 μm

INDUSTRIAL APPLICABILITY

As described in the foregoing pages, the laminate of the present invention can maintain high seal part strength even after the heat treatment such as sterilization. Accordingly, this is suitable for use in medical container, food container such as retort pouch, and the like, which are required to have high seal part strength also after the sterilization treatment. In particular, this can be suitably used for medical containers such as medical transfusion bag, more specifically, blood bag, platelet storing bag, transfusion (liquid medicament) bag, multiple-compartment medical container (where two or more kinds of liquid medicaments are stored in separate compartments partitioned by an adhesive part and these multiple liquid medicaments are mixed in a closed state by peeling off the adhesive part on use), artificial dialysis bag and the like.

**Claims**

1. (currently amended) A laminate having at least an inner layer, an intermediate layer and an outer layer, wherein said inner layer comprises a resin material (A) containing a high-density polyethylene, said intermediate layer comprises a resin material (B) mainly comprising Polyethylene-Base Resin I which is an ethylene-α-olefin copolymer produced using a single site-type catalyst obtained by copolymerizing ethylene with an α-olefin having from 3 to 20 carbon atoms and which has the following physical properties (a) to (d), and said outer layer comprises a resin material (C) containing a high-density polyethylene:

   (a) the density is less than 0.920 g/cm$^3$,
   (b) the MFR is from 0.1 to 50 g/10 min,
   (c) the amount X (% by mass) of o-dichlorobenzene-soluble portion at 25°C, the density d (g/cm$^3$) and the MFR (g/10 min) satisfy the following relationship:

$$X < 9.8 \times 10^3 \times (0.9300 - d + 0.008 \log MFR)^2 + 2.0$$

   the amount X (% by mass) of the o-dichlorobenzene-soluble portion at 25°C is obtained by heating 0.5 g of a sample in 20 ml of the ODCB at 135°C for 2 hours and after the sample is completely dissolved, the solution is cooled to 25°C: this solution is left standing at 25°C overnight and is then filtered by a Teflon-made filter; the filtrate is sampled and using this filtrate, the absorption peak area near the wave number of 2,925 cm$^{-1}$ which is an asymmetric stretching vibration of methylene, is determined by means of an infrared spectrometer; and based on the value obtained, the sample concentration is calculated from the previously prepared calibration curve: and from this value, the ODCB-soluble portion at 25°C is determined.
   (d) the parameter Cb of the composition distribution is from 1.08 to 2.00,

   the parameter Cb of the composition distribution is obtained by dissolving a sample in o-dichlorobenzene (ODCB) having added thereto an antioxidant, under heating at 135°C to have a sample concentration of 0.2% by mass: this solution is transferred to a column filled with diatomaceous earth (Celite 545) and cooled to 25°C at a rate of 1°C/min, thereby depositing the sample on the surface of Celite, while flowing ODCB into this column at a constant flow rate, the column temperature is elevated stepwise to 130°C in increments of 5°C to elute and thereby fractionate the sample; methanol is subsequently mixed with the eluate and the reprecipitated sample is filtered and dried to obtain fraction samples at respective elution temperatures; the mass fraction and the branching degree (the number of branches per 1.000 carbon atoms) of the eluted sample at each temperature are determined by an isotopic carbon nuclear magnetic resonance apparatus ($^{13}$C-NMR);

the branching degrees of the factions at 30 to 90°C are corrected by plotting the measured branching degrees with respect to the elution temperature and the correlation is approximated to a straight line by the least square and thereby, a calibration curve is configured; the value determined from this calibration curve is designated as the branching degree of each fraction: as for the components at elution temperatures of 95°C or more, the linear relationship is not necessarily established between the elution temperature and the branching degree, and therefore, the values found are used without performing this correction:

subsequently, the mass fraction $w_i$ of each fraction is divided by the variation ($b_i$-$b_{i-1}$) in the branching degree $b_i$ per the elution temperature of 5°C to determine the relative concentration $C_i$, and the determined relative concentrations are plotted with respect to the branching degree to obtain a composition distribution curve; this composition distribution curve is divided into fixed widths and the composition distribution parameter Cb is calculated according to the following formula:

$$Cb = \left(\frac{\sum C_j b_j^2}{\sum C_j b_j}\right) \Bigg/ \left(\frac{\sum C_m b_j}{\sum C_j}\right)$$

2. The laminate as claimed in claim 1, wherein said resin material (A) constituting said inner layer comprises only a high-density polyethylene.

3. The laminate as claimed in claim 1, wherein said resin material (A) constituting said inner layer is a resin composition obtainable by blending a high-density polyethylene with Polyethylene-Base Resin II which is an ethylene·$\alpha$-olefin copolymer obtained by copolymerizing ethylene and an $\alpha$-olefin having from 3 to 20 carbon atoms and which has the following physical properties (e) to (h):

   (e) the density is 0.920 to less than 0.960 g/cm$^3$,
   (f) the MFR is from 0.1 to 50 g/10 min,
   (g) the amount X (% by mass) of o-dichlorobenzene-soluble portion at 25°C, the Density d (g/cm$^3$) and the MFR (g/10 min) satisfy the following relationship:

      i) in the case of d-0.008logMFR$\geqq$0.93, X<2.0, and
      ii) in the case of d-0.008logMFR<0.93,

$$X<9.8\times10^3\times(0.9300-d+0.008logMFR)^2+2.0$$

      and

   (h) the parameter Cb of the composition distribution is less than 2.00.

4. The laminate as claimed in claim 3, wherein said $\alpha$-olefin described in claim 3 is one or more members selected from the group consisting of propylene, butene-1, 4-methylpentene-1, hexene-1, octene-1, decene-1 and dodecene-1.

5. The laminate as claimed in claim 3, wherein in said ethylene $\alpha$-olefin copolymer constituting Polyethylene-Base Resin II, the content of said $\alpha$-olefin in said copolymer is 30 mol% or less.

6. The laminate as claimed in claim 3, wherein said resin material (A) constituting said inner layer is a resin composition obtained by blending from 40 to 99% by mass of said high-density polyethylene and from 60 to 1% by mass of said Polyethylene-Base Resin II.

7. The laminate as claimed in claim 1, wherein said high-density polyethylene of said resin material (A) constituting said inner layer has an MFR of 0.1 to 20 g/10 min and a density of 0.940 to 0.970 g/cm$^3$.

8. The laminate as claimed in claim 1, Wherein said resin material (B) constituting said intermediate layer comprises only Polyethylene-Base Resin I.

9. The laminate as claimed in claim 1, wherein said $\alpha$-colefin described in claim 1 is one or more members selected from the group consisting of propylene, butene-1, 4-methylpentene-1, hexene-1, octene-1, decene-1. and dodecene-1.

10. The laminate as claimed in claim 1, wherein said Polyethylene-Base Resin I satisfies said physical properties (a) to (d) and at the same time, has the following physical properties (i) and (j):

    (i) Mw/Mn is from 1.5 to 3.5, and
    (j) a plurality, of peaks are present on the elution temperature-elution amount curve by continuous temperature rising elution fractionation (TREF).

11. The laminate as claimed in claim 1, wherein said resin material (B) constituting said intermediate layer is a resin composition obtained by blending said Polyethylene-Base Resin I and said Polyethylene-Base Resin II.

12. The laminate as claimed in claim 1, wherein said resin material (B) constituting said intermediate, layer is a resin composition obtained by blending from 50 to 99% by mass of said Polyethylene-Base Resin I and from 50 to 1% by mass of said Polyethylene-Base Resin II.

13. The laminate as claimed in claim 1, wherein resin resin material (B) constituting said intermediate layer is a resin composition obtained by blending Polyethylene-Base Resin I with at least one member selected from the group consisting of high-density polyethylene, medium-density polyethylene, high-pressure low-density polyethylene, linear low-density polyethylene, polypropylene, ethylene-propylene random copolymer and ethylene-propylene block copolymer.

14. The laminate as claimed in claim 1, wherein said resin material (B) constituting said intermediate layer is a resin composition obtained by blending Polyethylene-Base Resin I with a resin having the density of 0.935 g/cm$^3$ or greater.

15. The laminate as claimed in claim 1, wherein said resin material (C) constituting said outer layer comprises only a high-density polyethylene.

16. The laminate as claimed in claim 1, wherein said resins materials (C) constituting said outer layer is a resin composition obtained by blending a high-density polyethylene and Polyethylene-Base Resin II which is an ethylene $\alpha$-olefin copolymer obtained by copolymerizing ethylene and an $\alpha$-olefin having from 3 to 20 carbon atoms and which has the following physical properties (e) to (h):

    (e) the density is 0.920 to less than 0.960 g/cm$^3$,
    (f) the MFR is from 0.1 to 50 g/10 min,
    (g) the amount X(% by mass) of o-dichlorobenzene-soluble portion at 25˚C, the density d (g/cm$^3$) and the MFR (g/10 min) satisfy the following relationship:

    i) in the case of d-0.0081og MFR $\geqq$ 0.93 X <2.0 and
    ii) in the case of d-0-008logMFR<0.93,

$$X < 9.8 \times 10^3 \times (0.9300 - d + 0.008 \log MFR)^2 + 2.0$$

    and

    (h) the parameter Cb of the composition distribution is less than 2.00.

17. The laminate as claimed in claim 1, wherein said resin materials (C) constituting said outer layer is a resin composition obtained by blending from 95 to 5% by mass of said high-density polyethylene and from 5 to 95% by mass of said Polyethylene-Base Resin II.

18. The laminate as claimed in claim 1, wherein said outer layer comprises a resin material (D) comprising a heat-resistant resin material having a melting point peak temperature of 130˚C or more as measured by differential scanning calorimeter (DSC), instead of said resin material (C) containing high-density polyethylene.

19. The laminate as claimed in claim 18, wherein said material constituting said resin material (D) is a resin composition having blended therein at least one member selected from the group consisting of medium-density polyethylene, polypropylene, ethylene-propylene random copolymer, ethylene-propylene block copolymer, ethylene-vinyl alcohol copolymer (EVOH), polyamide such as 6-nylon and 6,6-nylon, and polyester such as polyethylene terephthalate and polybutylene terephthalate.

20. The laminate as claimed in claim 1, wherein the thickness of the entire laminate is from 0.01 to 1 mm.

21. The laminate as claimed in claim 1, wherein the thickness ratio among respective layers is inner layer/intermediate layer/outer layer = 30 to 1/40 to 98/30 to 1 (assuming that the sum total is 100).

22. A method for producing a laminate, comprising the step of:

> a step in which said laminate claimed in claim 1 is obtained by a water-cooling co-extrusion multilayer inflation method or a co-extrusion multilayer T-die casting method.

23. A container comprising said laminate claimed in claim 1.

24. The container as claimed in claim 23, wherein at least a part of said inner layer of the laminate is heat-sealed as a heat-seal layer.

25. The container as claimed in claim 23, wherein said inner layer of said laminate is worked into a bag shape by heat-sealing the inner layers at four sides as a heat seal layers

**Patentansprüche**

1. Laminat bzw. Verbundstoff mit zumindest einer inneren Schicht, einer Zwischenschicht und einer äußeren Schicht, worin die innere Schicht ein Harzmaterial (A) aufweist, welches ein Polyethylen hoher Dichte enthält, die Zwischenschicht ein Harzmaterial (B) aufweist, welches hauptsächlich ein Harz I auf Polyethylenbasis enthält, welches ein Ethylen-$\alpha$-Olefin-Copolymer ist, das unter Verwendung eines Single-Site-Katalysators hergestellt wurde und durch Copolymerisieren von Ethylen mit einem $\alpha$-Olefin mit 3 bis 20 Kohlenstoffatomen erhalten wurde, und welches die folgenden physikalischen Eigenschaften (a) bis (d) aufweist, wobei die äußere Schicht ein Harzmaterial (C) aufweist, welches ein Polyethylen hoher Dichte enthält:

> (a) die Dichte ist weniger als 0,920 g/cm$^3$,
> (b) die MFR ist von 0,1 bis 50 g/10 min,
> (c) die Menge X (Massen-%) des bei 25 ˚C in o-Dichlorbenzol löslichen Anteils, die Dichte d (g/cm$^3$) und die MFR (g/10 min) erfüllen die folgende Beziehung:

$$X < 9,8 \times 10^3 \times (0,9300 - d + 0,008 \log MFR)^2 + 2,0$$

> worin die Menge X (Massen-%) des bei 25 ˚C in o-Dichlorbenzol löslichen Anteils erhalten wird, indem 0,5 g einer Probe in 20 ml des ODCB bei 135 ˚C für 2 Stunden erhitzt wird, und, nachdem die Probe vollständig aufgelöst ist, die Lösung auf 25 ˚C gekühlt wird; diese Lösung über Nacht bei 25 ˚C stehen gelassen wird und dann mit einem Teflon-Filter filtriert wird; eine Probe des Filtrats entnommen wird und unter Verwendung dieses Filtrats die Absorptionspeakfläche im Bereich der Wellenzahl von 2925 cm$^{-1}$, wobei es sich um eine asymmetrische Streckschwingung von Methylen handelt, mittels eines Infrarotspektrometers bestimmt wird; und auf Grundlage des erhaltenen Werts die Probenkonzentration anhand der zuvor erstellten Kalibrierkurve berechnet wird; und aus diesem Wert der bei 25 ˚C in ODCB löslichen Anteil bestimmt wird,
> (d) der Parameter Cb der Zusammensetzungsverteilung ist von 1,8 bis 2,00,

wobei der Parameter Cb der Zusammensetzungsverteilung erhalten wird, indem eine Probe in o-Dichlorbenzol (ODCB) mit einem dazu gegebenen Antioxidationsmittel unter Erhitzen bei 135˚C gelöst wird, so dass eine Probenkonzentration von 0,2 Massen-% erhalten wird; diese Lösung auf eine Säule überführt wird, die mit Diatomeenerde (Celite 545) gefüllt ist, und mit einer Geschwindigkeit von 1˚C/min auf 25 ˚C gekühlt wird, wodurch die Probe auf der Oberfläche von Celite abgeschieden wird; während ODCB mit einer konstanten Strömungsgeschwindigkeit in diese Säule eingeführt wird, wobei die Säulentemperatur stufenweise in Inkrementen von 5 ˚C auf 130˚C erhöht wird, um die Probe zu eluieren und **dadurch** zu fraktionieren; anschließend Methanol mit dem Eluat gemischt wird und die umgefällte Probe filtriert und getrocknet wird, um Fraktionsproben bei jeweiligen Elutionstemperaturen zu erhalten; wobei die Massenfraktion und der Verzweigungsgrad (die Anzahl von Verzweigungen pro 1000 Kohlenstoffatomen) der eluierten Probe bei jeder Temperatur mittels einer Isotopkohlenstoff-Kernmagnetresonanzapparatur ($^{13}$C-NMR) bestimmt wird;

wobei die Verzweigungsgrade der Fraktionen bei 30 bis 90 ˚C korrigiert werden, indem die gemessenen Verzweigungsgrade gegen die Elutionstemperatur aufgetragen werden und die Korrelation mittels der Methode der kleinsten Quadrate einer geraden Linie approximiert wird und so eine Kalibrierkurve erstellt wird; wobei der aus dieser Kalibrierkurve bestimmte Wert als der Verzweigungsgrad jeder Fraktion bezeichnet wird; wobei für die Komponenten bei Elutionstemperaturen von 95˚C oder mehr die lineare Beziehungen zwischen der Elutionstemperatur und dem Verzweigungsgrad nicht notwendigerweise gewährleistet wird und diese ermittelten Werte daher ohne Vornahme dieser Korrektur verwendet werden;

anschließend die Massenfraktion $w_i$ jeder Fraktion durch die Variation ($b_j$-$b_{i-j}$) in dem Verzweigungsgrad $b_i$ pro Elutionstemperatur von 5 ˚C geteilt wird, um die relative Konzentration $C_i$ zu bestimmen, und die bestimmten relativen Konzentration gegen den Verzweigungsgrads aufgetragen werden, um eine Zusammensetzungsverteilungskurve zu erhalten; und diese Zusammensetzungsverteilungskurve in festgelegte Breiten unterteilt wird und der Zusammensetzungsverteilungsparameter Cb gemäß der folgenden Formel berechnet wird:

$$Cb = \left( \frac{\sum C_j b_j^2}{\sum C_j b_j} \right) \Big/ \left( \frac{\sum C_m b_j}{\sum C_j} \right)$$

2. Laminat nach Anspruch 1, worin das die innere Schicht bildende Harzmaterial (A) nur ein Polyethylen hoher Dichte enthält.

3. Laminat nach Anspruch 1, worin das die innere Schicht bildende Harzmaterial (A) eine Harzzusammensetzung ist, erhältlich durch Vermischen eines Polyethylens hoher Dichte mit einem Harz II auf Polyethylenbasis, wobei es sich um ein Ethylen-$\alpha$-Olefin-Copolymer handelt, erhalten durch Copolymerisieren von Ethylen und einem $\alpha$-Olefin mit 3 bis 20 Kohlenstoffatomen, und welches die folgenden physikalischen Eigenschaften (e) bis (h) aufweist:

(e) die Dichte ist 0,920 bis weniger als 0,960 g/cm$^3$,
(f) die MFR ist von 0,1 bis 50 g/10 min
(g) der Anteil X (Massen-%) des bei 25 ˚C in o-Dichlorbenzol löslichen Anteils, die Dichte d (g/cm$^3$) und die MFR (g/10 min) erfüllen die folgende Beziehung:

(i) im Fall von d-0,008logMFR ≥ 0,93, X < 2,0 und
(ii) im Fall von d-0,008logMF < 0,93,

$$X < 9,8 \times 10^3 \times (0,9300-d+0,008logMFR)^2 + 2,0$$

und

(h) der Parameter Cb der Zusammensetzungsverteilung ist weniger als 2,00.

4. Laminat nach Anspruch 3, worin das in Anspruch 3 beschrieben $\alpha$-Olefin 1 ein oder mehrere Element(e) ist, ausgewählt aus der Gruppe, bestehend aus Propylen, Buten-1, 4-Methylpenten-1, Hexen-1, Octen-1, Decen-1 und Dodecen-1.

5. Laminat nach Anspruch 3, worin in dem Ethylen-α-Olefin-Copolymer, welches das Harz II auf Polyethylenbasis bildet, der Gehalt des α-Olefins in dem Copolymer 30 Mol-% oder weniger beträgt.

6. Laminat nach Anspruch 3, worin das Harzmaterial (A), welches die innere Schicht bildet, eine Harzzusammensetzung ist, erhalten durch Vermischen von 40 bis 99 Massen-% des Polyethylens hoher Dichte und von 60 bis 1 Massen-% des Harzes II auf Polyethylenbasis.

7. Laminat nach Anspruch 1, worin das Polyethylen hoher Dichte des die innere Schicht bildenden Harzmaterials (A) eine MFR von 0,1 bis 20 g/10 min und eine Dichte von 0,940 bis 0,970 g/cm$^3$ aufweist.

8. Laminat nach Anspruch 1, worin das die Zwischenschicht bildende Harz (B) nur das Harz I auf Polyethylenbasis enthält.

9. Laminat nach Anspruch 1, worin das in Anspruch 1 beschriebene α-Olefin ein oder mehrere Element(e) ist, ausgewählt aus der Gruppe, bestehend aus Propylen, Buten-1, 4-Methylpenten-1, Hexen-1, Octen-1, Decen-1 und Dodecen-1.

10. Laminat nach Anspruch 1, worin das Harz I auf Polyethylenbasis die physikalischen Eigenschaften (a) bis (d) erfüllt und gleichzeitig die folgenden physikalischen Eigenschaften (i) und (j) aufweist:

   (i) Mw/Mn beträgt von 1,5 bis 3,5, und
   (j) eine Mehrzahl von Peaks befindet sich auf der Kurve "Elutionstemperatur-Elutionsmenge" bei kontinuierlicher Temperaturerhöhungselutionsfraktionierung (TREF).

11. Laminat nach Anspruch 1, worin das die Zwischenschicht bildende Harzmaterial (B) eine Harzzusammensetzung ist, erhalten durch Mischen des Harzes I auf Polyethylenbasis und des Harzes II auf Polyethylenbasis.

12. Laminat nach Anspruch 1, worin das die Zwischenschicht bildende Harzmaterial (B) eine Harzzusammensetzung ist, erhalten durch Vermischen von 50 bis 99 Massen-% des Harzes I auf Polyethylenbasis und von 50 bis 1 Massen-% des Harzes II auf Polyethylenbasis.

13. Laminat nach Anspruch 1, worin das die Zwischenschicht bildende Harzmaterial (B) eine Harzzusammensetzung ist, erhalten durch Vermischen des Harzes I auf Polyethylenbasis mit mindestens einem Element, ausgewählt aus der Gruppe, bestehend aus Polyethylen hoher Dichte, Polyethylen mittlerer Dichte, Hochdruckpolyethylen niedriger Dichte, linearem Polyethylen niedriger Dichte, Polypropylen, einem statistischen Ethylen-Propylen-Copolymer und einem Ethylen-Propylen-Blockcopolymer.

14. Laminat nach Anspruch 1, worin das die Zwischenschicht bildende Harzmaterial (B) eine Harzzusammensetzung ist, erhalten durch Vermischen des Harzes I auf Polyethylenbasis mit einem Harz mit einer Dichte von 0,935 g/cm$^3$ oder größer.

15. Laminat nach Anspruch 1, worin das die äußere Schicht bildende Harzmaterial (C) nur ein Polyethylen hoher Dichte enthält.

16. Laminat nach Anspruch 1, worin das die äußere Schicht bildende Harzmaterial (C) eine Harzzusammensetzung ist, erhalten durch Vermischen eines Polyethylens hoher Dichte und des Harzes II auf Polyethylenbasis, welches ein Ethylen-α-Olefin-Copolymer ist, erhalten durch Copolymerisieren von Ethylen und einem α-Olefin mit 3 bis 20 Kohlenstoffatomen, mit folgenden physikalischen Eigenschaften (e) bis (h):

   (e) die Dichte ist 0,920 bis weniger als 0,960 g/cm$^3$,
   (f) die MFR ist von 0,1 bis 50 g/10 min
   (g) der Anteil X (Massen-%) des bei 25 °C in o-Dichlorbenzol löslichen Anteils, die Dichte d (g/cm$^3$) und die MFR (g/10 min) erfüllen die folgende Beziehung:

      (i) im Fall von d-0,008logMFR ≥ 0,93, X < 2,0 und
      (ii) im Fall von d-0,008logMFR < 0,93,

$$X < 9,8 \times 10^3 \times (0,9300-d+0,008\log MFR)^2 + 2,0$$

und

(h) der Parameter Cb der Zusammensetzungsverteilung ist weniger als 2,00.

**17.** Laminat nach Anspruch 1, worin das die äußere Schicht bildende Harzmaterial (C) eine Harzzusammensetzung ist, erhalten durch Vermischen von 95 bis 5 Massen-% des Polyethylens hoher Dichte und von 5 bis 95 Massen-% des Harzes II auf Polyethylenbasis.

**18.** Laminat nach Anspruch 1, worin die äußere Schicht ein Harzmaterial (D) aufweist, welches ein hitzebeständiges Harzmaterial mit einer Schmelzpunkt-Peaktemperatur von 130°C oder mehr aufweist, gemessen mittels eines Differenzialscanningcalorimeters (DSC), anstelle des ein Polyethylen hoher Dichte enthaltenden Harzmaterials (C).

**19.** Laminat nach Anspruch 18, worin das hitzebeständige Harzmaterial, welches das Harzmaterial (D) bildet, eine Harzzusammensetzung ist, die eingemischt mindestens ein Element aufweist, ausgewählt aus der Gruppe, bestehend aus Polyethylen mittlerer Dichte, Polypropylen, einem statistischen Ethylen-Propylen-Copolymer, einem Ethylen-Propylen-Blockcopolymer, einem Ethylen-Vinylalkohol-Copolymer (EVOH), Polyamid, wie z.B. 6-Nylon und 6,6-Nylon, und einem Polyester, wie z.B. Polyethylenterephthalat und Polybutylenterephthalat.

**20.** Laminat nach Anspruch 1, worin die Dicke des gesamten Laminats von 0,01 bis 1 mm beträgt.

**21.** Laminat nach Anspruch 1, worin das Dickenverhältnis der jeweiligen Schichten wie folgt ist: innere Schicht/Zwischenschicht/äußere Schicht = 30 bis 1/40 bis 98/30 bis 1 (unter der Annahme, dass die gesamte Summe 100 beträgt).

**22.** Verfahren zur Herstellung eines Laminats mit folgendem Schritt:

einem Schritt, bei dem das in Anspruch 1 beanspruchte Laminat mittels eines Wasserkühlungs-Coextrusions-Mehrschichtblasverfahrens oder eines Coextrusions-Mehrschicht-T-Düsengießverfahrens erhalten wird.

**23.** Behälter, welcher das Laminat nach Anspruch 1 enthält.

**24.** Behälter nach Anspruch 23, worin zumindest ein Teil der inneren Schicht des Laminats als Heißversiegelungsschicht heißversiegelt ist.

**25.** Behälter nach Anspruch 23, worin die innere Schicht des Laminats mittels Heißversiegeln der inneren Schichten an vier Seiten als Heißversiegelungsschicht zu einer Beutelform ausgearbeitet ist.

**Revendications**

**1.** Stratifié ayant au moins une couche interne, une couche intermédiaire et une couche externe, où ladite couche interne comprend une matière résinique (A) contenant un polyéthylène haute densité, ladite couche intermédiaire comprend une matière résinique (B) comprenant principalement une résine à base de polyéthylène I qui est un copolymère éthylène-$\alpha$-oléfine produit au moyen d'un catalyseur de type à un seul site obtenu par copolymérisation de l'éthylène avec une $\alpha$-oléfine ayant de 3 à 20 atomes de carbone et qui a les propriétés physiques (a) à (d) suivantes, et ladite couche externe comprend une matière résinique (C) contenant un polyéthylène haute densité :

(a) la densité est inférieure à 0,920 g/cm$^3$,
(b) le MFR est de 0,1 à 50 g/10 min,
(c) la quantité X (% en masse) de partie soluble dans le o-dichlorobenzène à 25°C, la densité d (g/cm$^3$) et le MFR (g/10 min) satisfont la relation suivante :

$$X < 9{,}8 \times 10^3 \times (0{,}9300 - d + 0{,}008 \log MFR)^2 + 2{,}0$$

la quantité X (% en masse) de partie soluble dans le o-dichlorobenzène à 25˚C est obtenue par chauffage de 0,5 g d'un échantillon dans 20 ml de ODCB à 135˚C pendant 2 h et, après la dissolution complète de l'échantillon, la solution est refroidie à 25˚C ; cette solution est laissée au repos à 25˚C pendant une nuit et est ensuite filtrée par un filtre en Téflon ; le filtrat est soumis à un prélèvement d'échantillons et, au moyen de ce filtrat, l'aire des pics d'absorption au voisinage du nombre d'onde de 2925 cm$^{-1}$, qui est une vibration d'élongation asymétrique du méthylène, est déterminée au moyen d'un spectromètre infrarouge ; et sur la base de la valeur obtenue, la concentration d'échantillon est calculée d'après la courbe d'étalonnage préparée auparavant ; et d'après cette valeur, la partie soluble dans le ODCB à 25˚C est déterminée,

(d) le paramètre Cb de la distribution de composition est de 1,08 à 2,00,

le paramètre Cb de distribution de composition est obtenu par dissolution d'un échantillon dans le o-dichlorobenzène (ODCB) auquel est ajouté un antioxydant, sous chauffage à 135˚C pour avoir une concentration d'échantillon de 0,2 % en masse ; cette solution est transférée à une colonne remplie de terre de diatomées (Celite 545) et refroidie à 25˚C à une vitesse de 1˚C/min, pour déposer l'échantillon sur la surface de la Celite ; tandis que du ODCB est amené à couler dans cette colonne à un débit constant, la température de la colonne est augmentée par pas jusqu'à 130˚C par incréments de 5˚C pour éluer et ainsi fractionner l'échantillon ; du méthanol est ensuite mélangé avec l'éluat et l'échantillon reprécipité est filtré et séché pour obtenir des échantillons de fractions à des températures d'élution respectives ; la fraction massique et le degré de ramification (le nombre de ramifications pour 1 000 atomes de carbone) de l'échantillon élué à chaque température sont déterminés par un appareil de résonance magnétique nucléaire au carbone isotopique (RMN de $^{13}$C) ;

les degrés de ramification des fractions à 30 à 90˚ C sont corrigés par représentation graphique des degrés de ramification mesurés en fonction de la température d'élution et la corrélation est approximée à une droite par les moindres carrés et ainsi une courbe d'étalonnage est configurée ; la valeur déterminée d'après cette courbe d'étalonnage est désignée degré de ramification de chaque fraction ; concernant les composants à des températures d'élution de 95˚C ou plus, la relation linéaire n'est pas nécessairement établie entre la température d'élution et le degré de ramification, de sorte que les valeurs trouvées sont utilisées sans réaliser cette correction ;

puis, la fraction massique $w_i$ de chaque fraction est divisée par la variation $(b_r b_{i-j})$ dans le degré de ramification $b_i$ par température d'élution de 5˚C pour déterminer la concentration relative $C_i$, et les concentrations relatives déterminées sont représentées graphiquement en fonction du degré de ramification pour obtenir une courbe de distribution de composition ; cette courbe de distribution de composition est divisée en largeurs fixées et le paramètre de distribution de composition Cb est calculé selon la formule suivante :

$$Cb = \left( \frac{\sum C_j b_j^2}{\sum C_j b_j} \right) \bigg/ \left( \frac{\sum C_m b_j}{\sum C_j} \right)$$

**2.** Stratifié selon la revendication 1 où ladite matière résinique (A) constituant ladite couche interne comprend seulement un polyéthylène haute densité.

**3.** Stratifié selon la revendication 1 où ladite matière résinique (A) constituant ladite couche interne est une composition de résine pouvant être obtenue par mélange d'un polyéthylène haute densité avec une résine à base de polyéthylène II qui est un copolymère éthylène-α-oléfine obtenu par copolymérisation de l'éthylène et d'une α-oléfine ayant de 3 à 20 atomes de carbone et qui a les propriétés physiques (e) à (h) suivantes :

(e) la densité est 0,920 à moins de 0,960 g/cm$^3$,
(f) le MFR est de 0,1 à 50 g/10 min,
(g) la quantité X (% en masse) de partie soluble dans le o-dichlorobenzène à 25˚C, la densité d (g/cm$^3$) et le MFR (g/10 min) satisfont la relation suivante :

i) dans le cas de d-0,008logMFR≥0,93, X<2,0, et
ii) dans le cas de d-0,008logMFR<0,93,

$$X<9,8\times10^3\times(0,9300-d+0,008\log MFR)^2+2,0$$

et

(h) le paramètre Cb de la distribution de composition est inférieur à 2,00.

**4.** Stratifié selon la revendication 3 où ladite α-oléfine décrite dans la revendication 3 est un ou plusieurs membres choisis dans le groupe consistant en le propylène, le butène-1, le 4-méthylpentène-1, l'hexène-1, l'octène-.1, le décène-1 et le dodécène-1.

**5.** Stratifié selon la revendication 3 où, dans ledit copolymère éthylène-α-oléfine constituant la résine à base de polyéthylène II, la teneur de ladite α-oléfine dans ledit copolymère est 30 mol % ou moins.

**6.** Stratifié selon la revendication 3 où ladite matière résinique (A) constituant ladite couche interne est une composition de résine obtenue par mélange de 40 à 99 % en masse dudit polyéthylène haute densité et de 60 à 1 % en masse de ladite résine à base de polyéthylène II.

**7.** Stratifié selon la revendication 1 où ledit polyéthylène haute densité de ladite matière résinique (A) constituant ladite couche interne a un MFR de 0,1 à 20 g/10 min et une densité de 0,940 à 0,970 g/cm$^3$.

**8.** Stratifié selon la revendication 1 où ladite matière résinique (B) constituant ladite couche intermédiaire comprend seulement de la résine à base de polyéthylène I.

**9.** Stratifié selon la revendication 1 où ladite α-oléfine décrite dans la revendication 1 est un ou plusieurs membres choisis dans le groupe consistant en le propylène, le butène-1, le 4-méthylpentène-1, l'hexène-1, l'octène-1, le décène-1 et le dodécène-1.

**10.** Stratifié selon la revendication 1 où ladite résine à base de polyéthylène I satisfait lesdites propriétés physiques (a) à (d) et, en même temps, a les propriétés physiques (i) et (j) suivantes :

(i) Mp/Mn est de 1,5 à 3,5, et
(j) une pluralité de pics sont présents sur la courbe température d'élution-quantité d'élution par fractionnement d'élution à montée de la température (TREF) continue.

**11.** Stratifié selon la revendication 1 où ladite matière résinique (B) constituant ladite couche intermédiaire est une composition de résine obtenue par mélange de ladite résine à base de polyéthylène I et de ladite résine à base de polyéthylène II.

**12.** Stratifié selon la revendication 1 où ladite matière résinique (B) constituant ladite couche intermédiaire est une composition de résine obtenue par mélange de 50 à 99 % en masse de ladite résine à base de polyéthylène I et de 50 à 1 % en masse de ladite résine à base de polyéthylène II.

**13.** Stratifié selon la revendication 1 où la matière résinique (B) constituant ladite couche intermédiaire est une composition de résine obtenue par mélange de la résine à base de polyéthylène I avec au moins un membre choisi dans le groupe consistant en le polyéthylène haute densité, le polyéthylène moyenne densité, le polyéthylène basse densité haute pression, le polyéthylène basse densité linéaire, le polypropylène, un copolymère statistique éthylène-propylène et un copolymère séquencé éthylène-propylène.

**14.** Stratifié selon la revendication 1 où ladite matière résinique (B) constituant ladite couche intermédiaire est une composition de résine obtenue par mélange de la résine à base de polyéthylène 1 avec une résine ayant la densité de 0,935 g/cm$^3$ ou plus.

**15.** Stratifié selon la revendication 1 où ladite matière résinique (C) constituant ladite couche externe comprend seulement un polyéthylène haute densité.

16. Stratifié selon la revendication 1 où ladite matière résinique (C) constituant ladite couche externe est une composition de résine obtenue par mélange d'un polyéthylène haute densité et d'une résine à base de polyéthylène II qui est un copolymère éthylène-α-oléfine obtenu par copolymérisation de l'éthylène et d'une α-oléfine ayant de 3 à 20 atomes de carbone et qui a les propriétés physiques (e) à (h) suivantes :

(e) la densité est 0,920 à moins de 0,960 g/cm$^3$,
(f) le MFR est de 0,1 à 50 g/10 min,
(g) la quantité X (% en masse) de partie soluble dans le o-dichlorobenzène à 25°C, la densité d (g/cm$^3$) et le MFR (g/10 min) satisfont la relation suivante :

i) dans le cas de d-0,008logMFR≥0,93, X<2,0, et
ii) dans le cas de d-0,008logMFR<0,93,

$$X<9,8x10^3x(0,9300-d+0,008logMFR)^2+2,0$$

et

(h) le paramètre Cb de la distribution de composition est inférieur à 2,00.

17. Stratifié selon la revendication 1 où ladite matière résinique (C) constituant ladite couche externe est une composition de résine obtenue par mélange de 95 à 5 % en masse dudit polyéthylène haute densité et de 5 à 95 % en masse de ladite résine à base de polyéthylène II.

18. Stratifié selon la revendication 1 où ladite couche externe comprend une matière résinique (D) comprenant une matière résinique résistant à la chaleur ayant une température maximale de point de fusion de 130°C ou plus telle qu'elle est mesurée par calorimétrie différentielle à balayage (DSC) à la place de ladite matière résinique (C) contenant du polyéthylène haute densité.

19. Stratifié selon la revendication 18 où ladite matière résinique résistant à la chaleur constituant ladite matière résinique (D) est une composition de résine avec laquelle est mélangé au moins un membre choisi dans le groupe consistant en le polyéthylène moyenne densité, le polypropylène, un copolymère statistique éthylène-propylène, un copolymère séquencé éthylène-propylène, un copolymère éthylène-alcool vinylique (EVOH), un polyamide comme le nylon-6 et le nylon-6,6, et un polyester comme le polyéthylènetéréphtalate et le polybutylènetéréphtalate.

20. Stratifié selon la revendication 1 où l'épaisseur de tout le stratifié est de 0,01 à 1 mm.

21. Stratifié selon la revendication 1 où le rapport d'épaisseurs parmi les couches respectives est couche interne/couche intermédiaire/couche externe = 30 à 1/40 à 98/30 à 1 (en admettant que la somme totale est 100).

22. Procédé de production d'un stratifié comprenant l'étape de :

une étape dans laquelle ledit stratifié selon la revendication 1 est obtenue par un procédé de gonflement multicouches à co-extrusion à refroidissement par l'eau ou un procédé de coulée à filière en T multicouches à co-extrusion.

23. Récipient comprenant ledit stratifié selon la revendication 1.

24. Récipient selon la revendication 23 où au moins une partie de ladite couche interne du stratifié est thermosoudée sous forme d'une couche de thermosoudage.

25. Récipient selon la revendication 23 où ladite couche interne dudit stratifié est mise sous forme d'un sac par thermosoudage des couches internes au niveau de quatre côtés sous forme d'une couche de thermosoudage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8309939 A
- JP 7125738 A
- JP 8244791 A
- EP 0605220 A
- US 4657811 B
- JP 11293054 A
- JP 11310607 A
- JP 10077370 A